# EUROPEAN PATENT APPLICATION

(11) **EP 4 201 773 A1**
(43) Date of publication of application: **28.06.2023**
(21) Application number: 21857647.8
(22) Date of filing: 17.08.2021
(51) Int. Cl.: B60W 30/182, B60W 40/08, B60W 40/09, B60W 50/08, B60R 16/037

(54) **PERSONALIZED DRIVING MODE SETTING METHOD, SYSTEM, AND VEHICLE**

(30) Priority: 18.08.2020 CN 202010833415
(71) Applicant: Great Wall Motor Company Limited, Baoding, Hebei 071000 (CN)
(72) Inventor: SUN, Chengjun, Baoding, Hebei 071000 (CN); PENG, Lilong, Baoding, Hebei 071000 (CN); DAI, Fuguang, Baoding, Hebei 071000 (CN)
(74) Representative: Klunker IP Patentanwälte PartG mbB
(86) International application number: PCT/CN2021/112889
(87) International publication number: WO 2022/037553

(57) **Abstract**

A method and a system for setting a personalized driving mode, and a vehicle. The method includes steps of: obtaining personalized information set by a user in case that an activation of a personalized driving mode of a vehicle is detected; and processing the personalized information according to an information type of the personalized information and a pre-configured information processing strategy to generate a target control parameter of a vehicle controller, where the target control parameter is a control parameter of the vehicle in the personalized driving mode. The method for setting the personalized driving mode of this disclosure can provide the user with a driving experience different from the traditional fixed driving mode, meet actual driving demands of different users, and improve the user's driving experience.

## Description

### CROSS-REFERENCE TO RELATED APPLICATIONS

This disclosure claims the benefit of the Chinese Patent Application No. 202010833415.2 filed with CNIPA on August 18, 2020, entitled "Method and System for Setting Personalized Driving Mode, and Vehicle" the contents of which are incorporated herein by reference.

### TECHNICAL FIELD

This disclosure relates to the field of vehicle technology, and in particular, to a method and a system for setting a personal driving mode, and a vehicle.

### BACKGROUND

The existing vehicles are generally provided with several fixed driving modes, such as a sport mode, a standard mode, an economical mode, etc., each mode is provided with a corresponding driving control parameter, when a certain driving mode is selected by a user, a vehicle control unit (VCU) uses the corresponding driving control parameter in this mode to adjust functions of each system so as to provide the user with driving performances of this mode.

However, the users of vehicles are more complex, and the usage scenarios are also diverse. Each user has different driving demands, and only several fixed driving modes can be provided in the related technologies, and the users can only choose one driving mode from the inherent driving modes so that it is always difficult to find a suitable driving mode for the user to achieve the optimal driving experience or driving performance.

### SUMMARY

This disclosure provides a method for setting a personalized driving mode, a system for setting a personalized driving mode, and a vehicle, to solve a problem that the driving demands of each user cannot be meet due to the limited driving modes provided by the vehicle in the existing technology, which then reduces the user's driving experience or performance.

To solve the above problem, this disclosure is implemented as follows:

In accordance with a first aspect of this disclosure, a method for setting a personalized driving mode is provided, which is applied to a vehicle controller arranged in a vehicle, and the method includes steps of: obtaining personalized information set by a user in case that an activation of a personalized driving mode of the vehicle is detected; and processing the personalized information according to an information type of the personalized information and a pre-configured information processing strategy to generate a target control parameter of the vehicle controller, and the target control parameter is a control parameter of the vehicle in the personalized driving mode.

Optionally, the step of obtaining personalized information set by the user includes any of the following steps: obtaining pre-stored historical personalized information in case that a selection operation on the historical personalized information triggered by the user is detected; obtaining newly-added personalized information sent from a cloud, the newly-added personalized information is entered by the user at a mobile terminal and then sent to the cloud to be stored; identifying a personalized information quick response (QR) code to obtain the newly-added personalized information, the personalized information QR code is generated according to the personalized information entered by the user at the mobile terminal; and obtaining the newly-added personalized information entered by the user on a human-computer interaction interface of the vehicle controller.

Optionally, the step of processing the personalized information according to the information type of the personalized information and the pre-configured information processing policy to generate the target control parameter of the vehicle controller includes a step of: obtaining, according to an association relationship between the pre-stored historical personalized information and the control parameter, the target control parameter corresponding to the historical personalized information in case that the personalized information is the historical personalized information.

Optionally, the step of processing the personalized information according to the information type of the personalized information and the pre-configured information processing policy to generate the target control parameter of the vehicle controller includes steps of: performing feature extraction on the newly-added personalized information to obtain first feature data in case that the personalized information is the newly-added personalized information; converting the first feature data according to a preset conversion rule to obtain a first individualized factor; and generating, according to the first individualized factor, a first target control parameter of the vehicle controller.

Optionally, the step of generating the first target control parameter of the vehicle controller according to the first individualized factor includes steps of: generating, according to the first individualized factor, an initial physical characteristic parameter; performing a regression processing on the initial physical characteristic parameter to obtain a standard physical characteristic parameter; adjusting the standard physical characteristic parameter according to a range of physical parameters of the vehicle to generate the first target control parameter.

Optionally, after the first target control parameter of the vehicle controller is generated, the method also includes steps of: establishing an association relationship between the newly-added personalized information and the first target control parameter; and saving the association relationship between the newly-added personalized information and the first target control parameter as a piece of historical personalized information.

Optionally, after the first target control parameter of the vehicle controller is generated, the method also includes steps of: obtaining data of personalized driving behaviors of the user, the data of personalized driving behaviors is the user's driving behavior data generated by the vehicle in the personalized driving mode; performing feature extraction on the data of personalized driving behaviors to obtain second feature data; converting the second feature data according to the preset conversion rule to obtain a second individualized factor; and generating a second target control parameter of the vehicle controller according to the first individualized factor, the second individualized factor, and a preset proportional relationship between the first individualized factor and the second individualized factor.

Optionally, after the first target control parameter of the vehicle controller is generated, the method also includes steps of: obtaining, statistical data of driving behaviors in an area where the user is located; performing feature extraction on the statistical data of driving behaviors to obtain third feature data; converting the third feature data according to the preset conversion rule to obtain a third individualized factor; and generating a third target control parameter of the vehicle controller according to the first individualized factor, the third individualized factor, and a preset proportional relationship between the first individualized factor and the third individualized factor.

Optionally, after the first target control parameter of the vehicle controller is generated, the method also includes steps of: obtaining data of personalized driving behaviors of the user and statistical data of driving behaviors in an area where the user is located, the data of personalized driving behaviors is the user's driving behavior data generated by the vehicle in the personalized driving mode; performing feature extraction on the data of personalized driving behaviors to obtain second feature data, and performing feature extraction on the statistical data of driving behaviors to obtain third feature data; converting, according to the preset conversion rule, the second feature data and the third feature data to obtain a second individualized factor and a third individualized factor, respectively; and generating a fourth target control parameter of the vehicle controller according to the first individualized factor, the second individualized factor, the third individualized factor, and a preset proportional relationship between the first individualized factor, the second individualized factor and the third individualized factor.

In accordance with a second aspect of this disclosure, a system for setting a personalized driving mode is provided, which is applied to a vehicle controller arranged in a vehicle, and the system includes a first acquisition module and a first generation module.

The first acquisition module is configured to obtain personalized information set by a user in case that an activation of a personalized driving mode of the vehicle is detected.

The first generation module is configured to process the personalized information according to an information type of the personalized information and a pre-configured information processing strategy, to generate a target control parameter of the vehicle controller, and the target control parameter is a control parameter of the vehicle in the personalized driving mode.

Optionally, the first acquisition module includes a first acquisition sub-module, a second acquisition sub-module, a third acquisition sub-module, a fourth acquisition sub-module.

The first acquisition sub-module is configured to obtain pre-stored historical personalized information in case that a selection operation on the historical personalized information triggered by the user is detected.

The second acquisition sub-module is configured to obtain newly-added personalized information sent from a cloud, and the newly-added personalized information is entered by the user at the mobile terminal, and then sent to the cloud to be stored.

The third acquisition sub-module is configured to identify a personalized information QR code and obtain the newly-added personalized information, and the personalized information QR code is generated according to the personalized information entered by the user at the mobile terminal.

The fourth acquisition sub-module is configured to obtain the newly-added personalized information entered by the user on a human-computer interaction interface of the vehicle controller.

Optionally, the first generation module includes a fifth acquisition sub-module.

The fifth acquisition sub-module is configured to obtain the target control parameter corresponding to the historical personalized information according to the association relationship between the pre-stored historical personalized information and the control parameter in case that the personalized information is the historical personalized information.

Optionally, the first generation module includes a first feature extraction sub-module, a first conversion sub-module, and a generation sub-module.

The first feature extraction sub-module is configured to perform feature extraction on the newly-added personalized information to obtain first feature data in case that the personalized information is the newly-added personalized information.

The first conversion sub-module is configured to convert the first feature data according to a preset conversion rule to obtain a first individualized factor.

The generation sub-module is configured to generate a first target control parameter of the vehicle controller according to the first individualized factor.

Optionally, the generation sub-module includes a first generation sub-unit, a regression processing sub-unit, and an adjustment sub-unit.

The first generation sub-unit is configured to generate an initial physical characteristic parameter according to the first individualized factor.

The regression processing sub-unit is configured to perform a regression processing on the initial physical characteristic parameter to obtain a standard physical characteristic parameter.

The adjustment sub-unit is configured to adjust the standard physical characteristic parameter according to a range of physical parameter of the vehicle to generate the first target control parameter.

Optionally, the system also includes a creation module and a saving module.

The creation module is configured to establish an association relationship between the newly-added personalized information and the first target control parameter;

The saving module is configured to save the association relationship between the newly-added personalized information and the first target control parameter as a piece of historical personalized information.

Optionally, the system also includes a second acquisition module, a first feature extraction module, a first conversion module and a second generation module.

The second acquisition module is configured to obtain data of personalized driving behaviors of the user, the data of personalized driving behaviors is the user's driving behavior data generated by the vehicle in the personalized driving mode.

The first feature extraction module is configured to perform feature extraction on the data of personalized driving behaviors to obtain second feature data.

The first conversion module is configured to convert the second feature data according to the preset conversion rule to obtain a second individualized factor.

The second generation module is configured to generate a second target control parameter of the vehicle controller according to the first individualized factor, the second individualized factor, and a preset proportional relationship between the first individualized factor and the second individualized factor.

Optionally, the system includes a third acquisition module, a second feature extraction module, a second conversion module and a third generation module.

The third acquisition module is configured to obtain statistical data of driving behaviors in an area where the user is located.

The second feature extraction module is configured to perform feature extraction on the statistical data of driving behavior to obtain third feature data.

The second conversion module is configured to convert the third feature data according to the preset conversion rule to obtain a third individualized factor.

The third generation module is configured to generate a third target control parameter of the vehicle controller according to the first individualized factor, the third individualized factor, and a preset proportional relationship between the first individualized factor and the third individualized factor.

Optionally, the system also includes a fourth acquisition module, a third feature extraction module, a third conversion module, and a fourth generation module.

The fourth acquisition module is configured to obtain data of personalized driving behaviors of the user and the statistical data of driving behaviors in the area where the user is located, the data of personalized driving behaviors is the user's driving behavior data generated by the vehicle in the personalized driving mode.

The third feature extraction module is configured to perform feature extraction on the data of personalized driving behaviors to obtain second feature data, and perform the feature extraction on the statistical data of driving behaviors to obtain third feature data.

The third conversion module is configured, according to the preset conversion rule, to convert the second feature data to obtain a second individualized factor, and convert the third feature data to obtain a third individualized factor.

The fourth generation module is configured to generate a fourth target control parameter of the vehicle controller according to the first individualized factor, the second individualized factor, the third individualized factor and a preset proportional relationship between the first individualized factor, the second individualized factor and the third individualized factor.

In accordance with a third aspect of this disclosure, a vehicle is provided, which includes the system for setting a personalized driving mode described in the second aspect of this disclosure.

Compared with the existing technologies, this disclosure includes the following advantages:

In an embodiment of this disclosure, the vehicle controller is enabled to obtain the personalized information set by the user in case that the activation of the personalized driving mode of the vehicle is detected, and generate the target control parameter according to the personalized information set by the user and the pre-configured information processing strategy. On the one hand, a personalized driving mode is newly-added into the vehicle in the present application which can provide users with a driving experience different from the traditional fixed driving mode. On the other hand, because the target control parameter of the personalized driving mode is set according to the personalized information generated by the user, which thus can meet the actual driving demands of different users and improve the user's driving experience.

The above description is only an overview of the technical solutions of this disclosure. In order to better understand the technical means of this disclosure, which can be implemented according to the contents of the description, and in order to make the above and other objectives, features and advantages of this disclosure more comprehensible, some specific embodiments of this disclosure are enumerated below.

### BRIEF DESCRIPTION OF THE DRAWINGS

In order to illustrate solutions in the embodiments of the present application or related technologies more clearly, the following will briefly introduce the drawings that need to be used in description of the embodiments or the related technologies. Obviously, the drawings in the following description are only some embodiments in the present application. For those of ordinary skills in this field, other drawings may also be obtained based on these drawings on the premise of paying no creative efforts.
FIG. 1 shows a flow chart of steps of a method for setting a personalized driving mode in accordance with an embodiment of this disclosure;
FIG. 2 shows a schematic flowchart of the method for setting a personalized driving mode in accordance with an embodiment of this disclosure;
FIG. 3 shows a structural block diagram of a system for setting a personalized driving mode in accordance with an embodiment of this disclosure;
FIG. 4 schematically illustrates a block diagram of a computing processing device for performing the method in accordance with this disclosure; and
FIG. 5 schematically illustrates a storage unit for holding or carrying program codes implementing the method in accordance with this disclosure.

### DETAILED DESCRIPTION OF THE EMBODIMENTS

In order to make the above objectives, features and advantages of this disclosure more comprehensible, this disclosure will be further described in detail below in conjunction with the drawings and specific embodiments.

In terms of the problem in the related technologies that only several fixed driving modes can be provided by the vehicle, a user can only choose from several inherent driving modes, and it is often difficult for the user to find a suitable driving mode to achieve the optimal driving experience or performance, a core concept of the embodiments of this disclosure is proposed: to provide users with the function of setting personalized information, and the personalized information set by the user can be processed by a vehicle controller according to a pre-configured information processing strategy, to generate control parameters of the vehicle controller, in this way, the vehicle controller can generate corresponding driving modes according to the actual needs of users, meet different needs of different users, and improve the driving experience or performance of users.

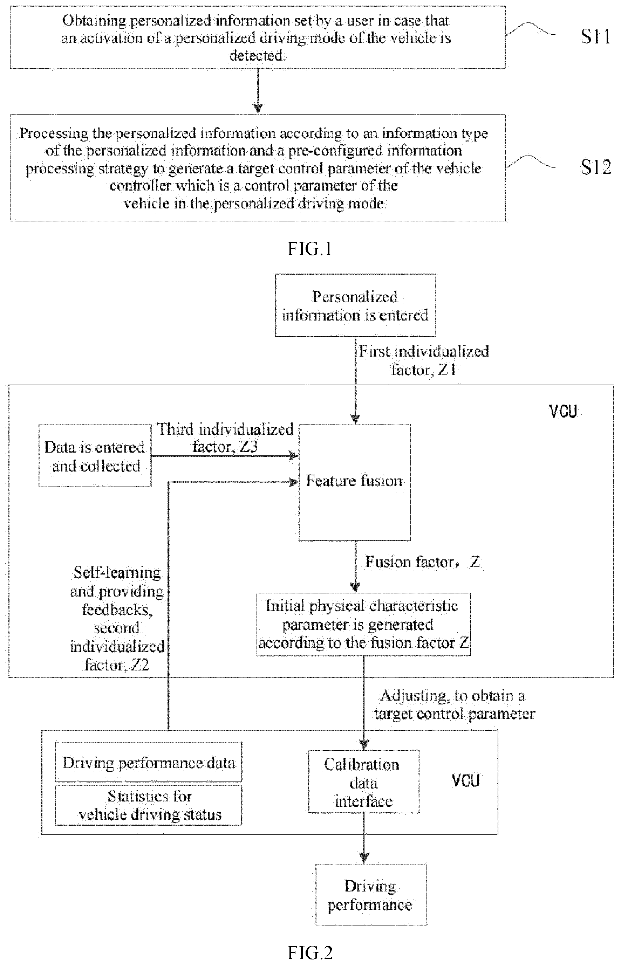

Referring to FIG. 1, FIG. 1 is a flow chart of a method for setting a personalized driving mode in accordance with an embodiment of this disclosure. The method for setting a personalized driving mode may be applied to a vehicle control unit arranged in a vehicle.

In this embodiment, the vehicle control unit (VCU), also known as a vehicle controller, is a core component of the vehicle and plays a vital role in the safe, stable and reliable operation of the vehicle.

As shown in FIG. 1, the method may specifically include the following steps S11 and S12.

In step 11, personalized information set by a user is obtained in case that an activation of a personalized driving mode of the vehicle is detected.

In this embodiment, the personalized driving mode, also known as the customized driving mode, refers to a driving mode that in addition to the traditional driving modes that comes with the vehicle, different personalized parameters can be entered by the user according to the actual needs of individual, to generate target control parameters of the vehicle controller.

Personalized information refers to a collection of personalized parameters set by a user. Usually, different users have different personalized information. Therefore, a variety of personalized driving modes can be obtained according to different personalized information. Exemplarily, the personalized information may include but not limited to the following information: individual basic physiological differences, individual personality differences, individual differences in vehicle-use environment, individual differences in experience, etc. The individual basic physiological differences may be subdivided into gender, age group, body shape (height, short, standard), weight (heavy, light, standard), etc. The individual personality differences may be subdivided into driving styles (sports, comfortable, energy-saving, etc.). The individual differences in vehicle-use environment may be subdivided into traffic conditions (urban areas, suburban areas, expressways, etc.), urban terrain (plateaus, mountainous areas, plains, etc.), regions (high temperature areas, alpine areas, standard), etc. The individual differences in experience may be subdivided into driving experience feedbacks (a response speed of the accelerator, a strength of energy recovery, etc.).

Usually, the vehicle may have several traditional driving modes, such as, the sports mode, the standard mode, the economical mode, etc. These driving modes are respectively provided with corresponding control parameters when the vehicle is designed and manufactured. In this embodiment, a personalized driving mode is added on the basis of the traditional driving modes.

In a specific implementation, the personalized driving mode may be selected and activated by a user through a human-computer interaction interface of the vehicle controller. At this time, the user's activation operation can be detected by the vehicle controller, and the personalized information will be set by the user after the personalized driving mode is activated, and then the personalized information set by the user can be obtained by the vehicle controller. It should be noted that this embodiment does not limit how the user activates the personalized driving mode, and how the vehicle detects that the personalized driving mode has been activated.

In step S12, the personalized information is processed according to an information type of the personalized information and a pre-configured information processing strategy, to generate a target control parameter of a vehicle controller.

The target control parameter is a control parameter of the vehicle in the personalized driving mode.

In this embodiment, the personalized information has different information types, and the types of personalized information are distinguishable by the vehicle controller. In addition, a memory of the vehicle controller is also pre-configured with information processing strategies, and different types of personalized information corresponding to different information processing strategies.

Therefore, in a specific implementation, the vehicle controller, after obtaining the personalized information set by the user, can first determine the type of personalized information, and then select the information processing strategy corresponding to the type of personalized information according to the pre-configured information processing strategy, to process the personalized information, thereby generating the target control parameter of the vehicle controller in the personalized driving mode. The control of the vehicle can be implemented by the vehicle controller using the target control parameter, and thus the functions of each system in the vehicle are adjusted.

In this embodiment, in case that the activation of the personalized driving mode of the vehicle is detected, the personalized information set by the user can be obtained by the vehicle controller, and according to the personalized information set by the user and the pre-configured information processing strategy, the target control parameter can be generated. On the one hand, a personalized driving mode is added in the vehicle in the present application, which can provide the user with a driving experience different from the traditional fixed driving modes; on the other hand, since the target control parameter of the personalized driving mode are generated according to personalized information set by the user, the actual driving demands of different users can be met, and the driving experience of users is improved.

In one implementation, there may be two types of the personalized information set by the user, one is the personalized information previously set by the user, also called historical personalized information, and the historical personalized information is stored in advance in the memory of the vehicle controller, and the other one is personalized information that is firstly entered by the user to the vehicle controller after the personalized driving mode of the vehicle is activated, and then obtained by the vehicle controller, also called newly-added personalized information.

In combination with the above embodiments, in another implementation of the present application and in the above step S11, the step of obtaining the personalized information set by the user may specifically include the following step S11A.

In step S11A, pre-stored historical personalized information is obtained in case that a selection operation on the historical personalized information triggered by the user is detected.

In this embodiment, the user's operation of setting personalized information may be an operation of selecting the pre-stored historical personalized information from the memory of the vehicle controller, that is to say, the personalized information previously set by the user can be stored in advance by the vehicle controller, so that when the personalized driving mode is activated by the user again later, the personalized driving mode can be directly selected from the memory, without the need for the user to input again the personalized information to the vehicle controller, which simplifies the steps for the user to set personalized information.

In actual implementation, after the personalized driving mode is activated by the user through the human-computer interaction interface, a continue selection operation may be performed by the user at the human-computer interaction interface, to select an option of newly-input personalized information, or directly select an option of historical personalized information. After the option of historical personalized information is selected, the stored historical personalized information may be provided for selection by the user. It should be noted that the number of historical personalized information in the memory of the vehicle controller may be multiple, that is to say, the historical personalized information under different driving environments or driving demands of the same user or different users can be saved to meet the diversified needs of users. For different historical personalized information, different identifiers may be provided. The identifier may be the name of user, or other identifiers that can uniquely identify the user's historical information, such as the storage time of historical personalized information, the introduction of personalized information, etc.

On this basis, the step S12, when executed by the vehicle controller, may specifically include a step of: obtaining, according to an association relationship between the pre-stored historical personalized information and a control parameter, the target control parameter corresponding to the historical personalized information in case that the personalized information is the historical personalized information.

Here, since the historical personalized information is stored in the vehicle controller, it can be understood that the personalized driving mode has been activated by the user before, and hence the corresponding target control parameter will also be stored in the memory of the vehicle controller, that is, the relationship between historical personalized information and the control parameter can be pre-stored in the memory. In this way, the target control parameter matching or corresponding to the historical personalized information selected by the user can be directly obtained by the vehicle controller according to the association relationship between the historical personalized information and the control parameter after a certain piece of historical personalized information is selected by the user. That is to say, in case that the selection operation on the historical personalized information is triggered by the user, the information processing strategy is that: the target control parameter corresponding to the historical personalized information is obtained directly according to the association relationship between the pre-stored historical personalized information and the control parameter.

By adopting the method of this embodiment, for the same demand of the same user, the historical personalized information can be directly selected when the personalized driving mode is activated by the user to set the personalized information, without the need for the user to repeatedly input the personalized information to the vehicle controller every time, thereby simplifying the steps of user operation. In addition, due to that the target control parameter corresponding to the historical personalized information can be directly obtained by the vehicle controller according to the association relationship between the historical personalized information and the control parameter after the historical personalized information is obtained, there is no need for the vehicle controller to recalculate the target control parameter according to the personalized information, which also simplifies the calculation process of the vehicle controller and reduces the time for the vehicle controller to obtain the target control parameter.

In combination with the above embodiments, in another implementation of the present application, a certain piece of personalized information may be set by the user for the first time. In this case, the step of obtaining the personalized information set by the user in the above step S11 may specifically include any of the following steps S11B, S11C and S111D:

In step S11B, newly-added personalized information sent from a cloud is obtained, and the newly-added personalized information is entered by the user at a mobile terminal and then sent to the cloud to be stored.

In step S11C, the newly-added personalized information is obtained by identifying a personalized information QR code, and the personalized information QR code is generated according to the personalized information entered by the user at the mobile terminal

In step S11D, the-newly-added personalized information entered by the user on the human-computer interaction interface of the vehicle controller is obtained.

This embodiment, in terms of a certain piece of personalized information set by the user for the first time, provides three ways for the vehicle controller to obtain the personalized information set by the user. The first way is to directly obtain the newly-added personalized information sent from the cloud; the second way is to obtain the newly-added personalized information by identifying the personalized information QR code; and the third way is to obtain the-newly-added personalized information entered by the user on the human-computer interaction interface of the vehicle controller.

Specifically, for the first way, a telematics box (T-BOX, on-board wireless terminal) may also be provided in the vehicle, to enable the vehicle to communicate with a cloud server, receive messages sent from the cloud server, and send messages to the cloud server.

In actual implementation, users may use mobile terminals (including but not limited to mobile phones, pads, laptops, wearable smart devices, etc.) to download the APP, register an account and bind the vehicle, after that, the personalized information can be directly put in the APP, and then the personalized information entered by the user can be sent through the APP to the cloud server to be stored. In this way, after the option of newly-input personalized information is selected by the user on the human-computer interaction interface of the bound vehicle, if the vehicle is connected to the Internet, then the personalized information stored in the cloud server can be synchronized directly to the vehicle controller through the T-BOX.

Specifically, for the second way, considering that some vehicles are not equipped with T-BOX, or the function of T-BOX is damaged, or the T-BOX is provided, but the vehicle cannot be connected to the network normally, at this time, the vehicle cannot use the T-BOX to obtain the newly-added personalized information sent from the cloud. Therefore, in this case, a quick response (QR) code recognition device may be arranged in the vehicle.

In actual implementation, users can use mobile terminals (which may be mobile phones, pads, laptops, etc.) to download the APP, directly put the personalized information in the APP. By using a QR code generation function provided by the APP on the mobile terminal, a personalized information QR code is generated based on the personalized information entered by the user, and then the generated Personalized information QR code is provided to the QR code recognition device in the vehicle for identification, so that the vehicle controller is enabled to obtain the personalized information.

Specifically, for the third way, after the personalized driving mode is activated by the user, the human-computer interaction interface of the vehicle controller can directly provide a personalized information input interface, so that the newly-added personalized information can be directly entered by the user at this interface. Compared with the previous two ways for entering personalized information, the third way for entering personalized information is more time-consuming as it requires the user to temporarily enter all personalized information.

By adopting the first way for the vehicle controller to obtain the personalized information set by the user, the user is enabled to remotely set the personalized information anytime, anywhere, so that the personalized information can be obtained directly after the personalized driving mode of the vehicle is activated, reducing the time spent on temporarily inputting the personalized information, the prerequisite is that the vehicle needs to be connected to the Internet. By adopting the second way for the vehicle controller to obtain the personalized information set by the user, the user is also enabled to remotely set the personalized information anytime, anywhere, it only needs to recognize the personalized information QR code through the QR code recognition device, which can also reduce the time spent on temporarily inputting the personalized information. By adopting the third way for the vehicle controller to obtain the personalized information set by the user, the user is required to temporarily input all personalized information, which increases the time spent on temporarily inputting personalized information. In general, when a user sets certain personalized information for the first time, this disclosure can provide multiple ways of setting personalized information, and improve the flexibility of setting personalized information.

In one implementation, the vehicle is also equipped with a head unit (HUT, host), and the personalized information stored in the cloud server will be synchronized by the T-BOX to the HUT first, or the personalized information recognized and obtained by the QR code recognition device is synchronized to the HUT first, or personalized information is entered by the user at the HUT interface. After the newly-added personalized information is obtained by the HUT, the newly-added personalized information is sent by the HUT to the vehicle controller in the form of CAN messages.

In combination with the above embodiments, if the user is setting a certain personalized information for the first time, the vehicle controller, when performing the above step S12, may specifically include the following steps S12A, S12B and S12C.

In step S12A, in case that the personalized information is newly-added personalized information, feature extraction is performed on the newly-added personalized information to obtain first feature data.

In this embodiment, if the user sets certain personalized information for the first time, that is, the personalized information obtained by the vehicle controller is newly-added personalized information, it may be indicated that the user has not activated the personalized driving mode before, or, although the personalized driving mode has been activated, no personalized information is set, therefore, the corresponding target control parameter will not be stored in the memory of the vehicle controller.

Since the personalized information entered by the user is based on the user's own driving demands, which is user-related data and cannot be directly expressed as the target control parameter. Therefore, it is necessary to first perform the feature extraction on the personalized information to obtain the first feature data, so that the personalized information is converted into the target control parameter that can be recognized by the vehicle controller. Here, the first feature data may be expressed in the form of a series of numbers, and each item in the personalized information corresponds to a row in the series of numbers.

In step S12B: the first feature data is converted according to a preset conversion rule to obtain a first individualized factor.

In this embodiment, the preset conversion rule is obtained based on a long-term experience of designers and experimental data. The preset conversion rule may be in the form of a conversion matrix or a calibration conversion table. This application does not limit the content of the preset conversion rule.

Therefore, in actual implementation, the first feature data may be converted using a conversion matrix or a calibration conversion table to obtain the first individualized factor. The first individualized factor can only reflect user-related data, and cannot be directly recognized by the vehicle.

In step S12C, a first target control parameter of the vehicle controller is generated according to the first individualized factor.

In this embodiment, the first target control parameter of the vehicle controller may be generated by the vehicle controller according to the first individualized factor after the first individualized factor is obtained.

In addition, considering that each vehicle has an objective limit on physical parameter range, that is, the control parameter range of each vehicle cannot be selected unlimitedly, the first target control parameter generated according to the first individualized factor must be within the physical parameter range of the vehicle. Therefore, in one implementation, the above step S12C may specifically include the following steps S12C1, S12C2 and S12C3.

In step S12C1, an initial physical characteristic parameter is generated according to the first individualized factor.

In step S12C2, a regression processing is performed on the initial physical characteristic parameter to obtain a standard physical characteristic parameter.

In step S12C3, the standard physical characteristic parameter is adjusted according to a physical parameter range of the vehicle to generate the first target control parameter.

In this embodiment, the initial physical characteristic parameter refers to the physical characteristic parameter that is directly generated according to the first individualized factor and is acceptable to the physical functions of the vehicle, such as, a torque from a motor, an opening angle of an accelerator pedal, a creeping speed, and an energy recovery strength etc. For the specific process of generating initial physical characteristic parameter according to the first individualized factor, reference may be made to relevant technologies. The process of generating physical characteristic parameters according to individualized factors, in the traditional driving mode design process, will not be described in detail here.

In addition, considering that the initial physical characteristic parameters generated according to the first individualized factor are not necessarily reasonable or valid, therefore, it is also necessary to check the validity or rationality of the initial physical characteristic parameter, that is, to perform the regression processing on the initial physical characteristic parameter to obtain the standard physical characteristic parameter.

After the standard physical characteristic parameter is obtained, the objective limitation on physical parameter range of each vehicle is also considered, and finally the standard physical characteristic parameter is adjusted according to the physical parameter range of the vehicle to generate the first target control parameter. In this case, the first target control parameter not only can be accepted by the vehicle's physical parameters, but also is reasonable and effective, and also conforms to the range limit on the vehicle's physical parameters, which thus can be used as the control parameter of the vehicle in the personalized driving mode.

In one implementation, after the first target control parameter of the vehicle controller is generated, the method for setting a personalized driving mode in this embodiment may also include the following steps S12D and S12E.

In step S12D, an association relationship is established between the newly-added personalized information and the first target control parameter.

In step S12E, the association relationship between the newly-added personalized information and the first target control parameter is saved as a piece of historical personalized information.

In this embodiment, the first target control parameter is generated according to the newly-added personalized information each time the newly-added personalized information is obtained by the vehicle controller, after that, the newly-added personalized information is associated with the corresponding first target control parameters for saving, that is, an association relationship is established between the newly-added personalized information and the first target control parameter, and the association relationship between the newly-added personalized information and the first target control parameter is saved as a piece of historical personalized information. In this way, the historical personalized information can be recorded and improved, so that the historical personalized information can be directly selected in a scenario that the same user has the same driving demand in the future, to enable the vehicle controller to directly output the target control parameter, which simplifies the process for the user to use the personalized driving mode.

In addition, considering that the newly-added personalized information is all personalized information entered by the user according to preset items. For example, in item of driving style, the comfort mode is entered by the user. One can well perceive that the preset items are usually entered in a relatively broad range of contents. Therefore, the reflected data is often limited and cannot accurately reflect the user's real driving behavior or habits. Therefore, to more accurately reflect the user's real driving behavior or habits, in one implementation and in step S12C, after the first target control parameter of the vehicle controller is generated, the method for setting a personalized driving mode of the present application may also include the following steps S131A, S131B, S131C and S131D.

In step S131A, data of personalized driving behaviors of the user is obtained.

Here, the data of personalized driving behaviors is the driving behavior data generated by the user in the personalized driving mode of the vehicle. For example, the data may be the performance of driving behavior. The range of accelerator pedal that the user is accustomed to using is 50-80km/h, or the user is accustomed to turning an air conditioner into the second gear during driving.

In this embodiment, after the first control parameter is generated by the vehicle controller, the functions of various systems of the vehicle are adjusted according to the first target control parameter, to enable the vehicle to be driven in a personalized mode. At this time, the user can drive the vehicle in the personalized mode. Since the user generates driving behavior data in the process of driving the vehicle in the personalized mode, thus the data of personalized driving behaviors of the user can be obtained by the vehicle controller.

In step S131B, the feature extraction is performed on the data of personalized driving behaviors to obtain second feature data.

A process of step S131B is similar to that of step S12A, and the relevant process may refer to the description of step S12A.

In step S131C: the second feature data is converted according to the preset conversion rule to obtain a second individualized factor.

Likewise, a process of step S131C is similar to that of step S12BA, and the relevant process may refer to the description of step S12B.

In step S13 1D, the second target control parameter of the vehicle controller is obtained according to the first individualized factor, the second individualized factor, and a preset proportional relationship between the first individualized factor and the second individualized factor.

In this embodiment, since the first individualized factor is generated based on the personalized information entered by the user, and the second individualized factor is generated based on the driving behavior data generated by the user in the personalized driving mode, the two factors may correspond to different weights. Therefore, the preset proportional relationship between the first individualized factor and the second individualized factor may be preset upon generating the first target control parameters of the vehicle controller; and then a fusion factor is determined according to the first individualized factor, the second individualized factor, and the preset proportional relationship between the first individualized factor and the second individualized factor; and finally, the second target control of the vehicle controller is generated according to the fusion factor parameter.

For example, the preset proportional relationship between the first individualized factor Z1 and the second individualized factor Z2 may be 2:1, at this time, a calculation manner of the fusion factor Z may be Z=2Z1+Z2. It should be noted that this application provides only an exemplary preset proportional relationship between the first individualized factor Z1 and the second individualized factor Z2, which should not be understood as a limitation on the preset proportional relationship between the first individualized factor Z1 and the second individualized factor Z2. The preset proportional relationship between the first individualized factor Z1 and the second individualized factor Z2 is set according to actual conditions.

In this embodiment, when generating the target control parameter, the personalized information entered by the user and the driving behavior data generated by the user in the personalized driving mode can be combined by the vehicle controller, that is, the user's real driving behavior data in the personalized driving mode is utilized by the vehicle controller for self-learning, and the target control parameter is corrected by utilizing the second individualized factor obtained from self-learning, so that the target control parameter generated by the vehicle controller is enabled to be more in line with the user's real driving behaviors and habits. Thus, it can provide users with the most suitable driving mode and personalized driving experience.

In addition, further considering that the data reflected by the newly-added personalized information is often limited, which may be different from the optimal driving behavior or habits of the user in a current area, therefore, in addition to using the real driving behavior data of the user in the personalized driving mode to correct the target control parameter, other data may also be used to correct the target control parameter, such as statistical data of driving behaviors in the area where the user is located.

Here, the statistical data of driving behaviors in the area where the user is located may be statistical data of various driving behaviors of all vehicles in the area where the user's vehicle is located collected by the cloud server, for example, including but not limited to the daily maximum speed of the same type of vehicles in different cities. Normally, the pedal opening-angle parameter can be adjusted according to the daily maximum speed of vehicles of the same type.

Therefore, in another implementation and in step S12C, after the first target control parameter of the vehicle controller is generated, the method for setting a personalized driving mode of the present application may further include the following steps S132A, S132B, S132C and S132D.

In step S 132A, statistical data of driving behaviors in an area where the user is located is obtained.

In step S132B, the feature extraction is performed on the statistical data of driving behaviors to obtain third feature data.

In step S132C: the third feature data is converted according to the preset conversion rule to obtain a third individualized factor.

In step S132D, a third target control parameter of the vehicle controller is obtained according to the first individualized factor, the third individualized factor, and a preset proportional relationship between the first individualized factor and the third individualized factor.

In this embodiment, similarly, since the first individualized factor is generated according to the personalized information entered by the user, and the third individualized factor is generated according to the statistical data of driving behaviors in the area where the user is located, the two factors may correspond to different weights. Therefore, the preset proportional relationship between the first individualized factor and the third individualized factor may be preset upon generating the first target control parameter of the vehicle controller; and then the fusion factor is generated according to the first individualized factor, the third individualized factor, and the preset proportional relationship between the first individualized factor and the third individualized factor; and finally, the third target control parameter of the vehicle controller is generated according to the fusion factor.

In this embodiment, when generating the target control parameter, the personalized information entered by the user and the statistical data of driving behaviors in the area where the user is located can be combined by the vehicle controller, that is, the target control parameter can be corrected according to the statistical data of driving behaviors in the area where the user is located, so that the target control parameter generated by the vehicle controller is enabled to refer to the driving behavior or habits of other users in the area where the user is located, to further provide the user with the most suitable driving mode and personalized driving experience in the current area.

In addition, in another implementation, the user's real driving behavior data of in the personalized driving mode and the statistical data of driving behaviors in the area where the user is located may be used simultaneously to modify the target control parameter. Therefore, in step S12C, after the first target control parameter of the vehicle controller is generated, the method for setting a personalized driving mode of the present application may also include the following steps S133A, S133B, S133C and S133D.

In step S133A, the data of personalized driving behaviors of the user and the statistical data of driving behaviors in the area where the user is located are obtained, the data of personalized driving behaviors is the user's driving behavior data generated by the vehicle in the personalized driving mode.

In step S133B, the feature extraction is performed on the data of personalized driving behaviors to obtain second feature data, and the feature extraction is performed on the statistical data of driving behaviors to obtain third feature data.

In step S133C, according to the preset conversion rule, the second feature data is converted to obtain a second individualized factor, and the third feature data is converted to obtain a third individualized factor.

In step S133D, a fourth target control parameter of the vehicle controller is generated according to the first individualized factor, the second individualized factor, the third individualized factor, and a preset proportional relationship between the first individualized factor, the second individualized factor and the third individualized factor.

Processes of steps S131A-S131D is similar to the processes of steps S132AS132D and steps S133A-S133D. For related processes, references may be made to the description of steps S132A-S132D and steps S133A-S133D.

In this embodiment, the real driving behavior data of the user in the personalized driving mode and the statistical data of driving behaviors in the area where the user is located are both used to modify the target control parameter, which can further provide the user with a suitable driving mode and personalized driving experience.

Referring to FIG. 2, FIG. 2 shows a schematic flowchart for a complete process of a method for setting a personalized driving mode in accordance with an embodiment of this disclosure. As shown in FIG. 2, the process is as follows:
1. Personalized information is entered and feature extraction is performed to obtain the first individualized factor Z1.
2. Data is entered and collected (the statistical data of driving behaviors in the area where the user is located is entered, and feature extraction is performed to obtain the third individualized factor Z3).
3. The feature fusion of the first individualized factor and the third individualized factor is performed to generate a fusion factor Z.
4. An initial physical characteristic parameter is generated according to the fusion factor Z.
5. The initial physical characteristic parameter is adjusted (regression processing, and adjusted according to a range of physical parameters of the vehicle) by the vehicle controller, to obtain the target control parameter.
6. The target control parameter is entered to a calibration data interface of the vehicle controller to adjust the driving performance of the vehicle (functions of various systems).
7. The data of personalized driving behaviors of the user (driving performance data and statistics for vehicle driving status) is recorded.
8. The vehicle controller self-leams (feature extraction, and the extracted feature data is converted) the data of personalized driving behaviors of the user, and provides feedbacks to obtain the second individualized factor.
9. The feature fusion of the first individualized factor, the second individualized factor and the third individualized factor is performed to generate a fusion factor Z, and return to step 4.

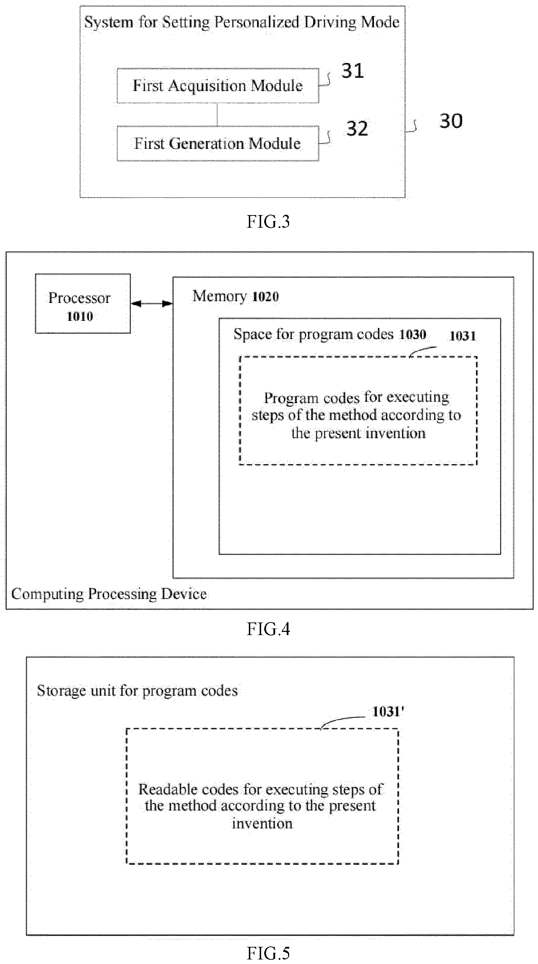

Based on the same technical idea, referring to FIG. 3, which shows a structural block diagram of a system for setting a personalized driving mode 30 according to an embodiment of this disclosure. The system is applied to a vehicle controller arranged in a vehicle. The system includes a first acquisition module 31 and a first generation module 32.

The first acquisition module 31 is configured to obtain the personalized information set by the user in case that an activation of a personalized driving mode of the vehicle is detected.

The first generation module 32 is configured to process the personalized information according to an information type of the personalized information and a pre-configured information processing strategy, and generate a target control parameter of the vehicle controller, the target control parameter is a control parameter of the vehicle in the personalized driving mode.

Optionally, the first acquisition module includes a first acquisition sub-module, a second acquisition sub-module, a third acquisition sub-module, a fourth acquisition sub-module.

The first acquisition sub-module is configured to obtain pre-stored historical personalized information in case that a selection operation on the historical personalized information triggered by the user is detected.

The second acquisition sub-module is configured to obtain newly-added personalized information sent from a cloud, and the newly-added personalized information is entered by the user at the mobile terminal, and then sent to the cloud to be stored.

The third acquisition sub-module is configured to identify a personalized information QR code and obtain the newly-added personalized information, and the personalized information QR code is generated according to the personalized information entered by the user at the mobile terminal.

The fourth acquisition sub-module is configured to obtain the newly-added personalized information entered by the user on a human-computer interaction interface of the vehicle controller.

Optionally, the first generation module includes a fifth acquisition sub-module.

The fifth acquisition sub-module is configured to obtain the target control parameter corresponding to the historical personalized information according to the association relationship between the pre-stored historical personalized information and the control parameter in case that the personalized information is the historical personalized information.

Optionally, the first generation module includes a first feature extraction sub-module, a first conversion sub-module, and a generation sub-module.

The first feature extraction sub-module is configured to perform feature extraction from the newly-added personalized information to obtain first feature data in case that the personalized information is the newly-added personalized information.

The first conversion sub-module is configured to convert the first feature data according to a preset conversion rule to obtain a first individualized factor.

The generation sub-module is configured to generate a first target control parameter of the vehicle controller according to the first individualized factor.

Optionally, the generation sub-module includes a first generation sub-unit, a regression processing sub-unit, and an adjustment sub-unit.

The first generation sub-unit is configured to generate an initial physical characteristic parameter according to the first individualized factor.

The regression processing sub-unit is configured to perform a regression processing on the initial physical characteristic parameter to obtain a standard physical characteristic parameter.

The adjustment sub-unit is configured to adjust the standard physical characteristic parameter according to a range of physical parameter of the vehicle to generate the first target control parameter.

Optionally, the system also includes a creation module and a saving module.

The creation module is configured to establish an association relationship between the newly-added personalized information and the first target control parameter;
The saving module is configured to save the association relationship between the newly-added personalized information and the first target control parameter as a piece of historical personalized information.

Optionally, the system also includes a second acquisition module, a first feature extraction module, a first conversion module and a second generation module.

The second acquisition module is configured to obtain data of personalized driving behaviors of the user, the data of personalized driving behaviors is the user's driving behavior data generated by the vehicle in the personalized driving mode.

The first feature extraction module is configured to perform feature extraction on the data of personalized driving behaviors to obtain second feature data.

The first conversion module is configured to convert the second feature data according to the preset conversion rule to obtain a second individualized factor.

The second generation module is configured to generate a second target control parameter of the vehicle controller according to the first individualized factor, the second individualized factor, and a preset proportional relationship between the first individualized factor and the second individualized factor.

Optionally, the system includes a third acquisition module, a second feature extraction module, a second conversion module and a third generation module.

The third acquisition module is configured to obtain statistical data of driving behaviors in an area where the user is located.

The second feature extraction module is configured to perform feature extraction on the statistical data of driving behavior to obtain third feature data.

The second conversion module is configured to convert the third feature data according to the preset conversion rule to obtain a third individualized factor.

The third generation module is configured to generate a third target control parameter of the vehicle controller according to the first individualized factor, the third individualized factor, and a preset proportional relationship between the first individualized factor and the third individualized factor.

Optionally, the system also includes a fourth acquisition module, a third feature extraction module, a third conversion module, and a fourth generation module.

The fourth acquisition module is configured to obtain data of personalized driving behaviors of the user and the statistical data of driving behaviors in the area where the user is located, the data of personalized driving behaviors is the user's driving behavior data generated by the vehicle in the personalized driving mode.

The third feature extraction module is configured to perform feature extraction on the data of personalized driving behaviors to obtain second feature data, and perform the feature extraction on the statistical data of driving behaviors to obtain third feature data.

The third conversion module is configured, according to the preset conversion rule, to convert the second feature data to obtain a second individualized factor, and convert the third feature data to obtain a third individualized factor.

The fourth generation module is configured to generate a fourth target control parameter of the vehicle controller according to the first individualized factor, the second individualized factor, the third individualized factor and a preset proportional relationship between the first individualized factor, the second individualized factor and the third individualized factor.

As for the system embodiments, which are basically similar to the method embodiments, thus the description is relatively simple, and for the related parts, references may be made to the part of the description of the method embodiments.

The device embodiments described above are only illustrative, and the units described as separate components may or may not be physically separated, and the components shown as units may or may not be physical units, that is, they may be located in one place, or may be distributed to multiple network units. Part or all of the modules can be selected according to actual needs to achieve the purpose of the solutions of these embodiments, which can be understood and implemented by those of ordinary skills in this filed without paying any creative efforts.

The various component embodiments of this disclosure may be implemented in hardware, or in software modules running on one or more processors, or in a combination thereof. It should understood for those of ordinary skills in this filed that a microprocessor or a digital signal processor (DSP) may be used in practice to implement some or all functions of some or all components in the computing processing device according to the embodiments of this disclosure. This disclosure may also be implemented as an apparatus or device programs (e.g., computer program and computer program product) for performing a part or all of the methods described herein. Such programs realizing this disclosure may be stored on a computer-readable medium, or may have the form of one or more signals. Such signals may be downloaded from an Internet site, or provided on a carrier signal, or provided in any other forms.

For example, FIG. 4 illustrates a computing processing device that may implement the methods according to this disclosure. The computing processing device conventionally includes a processor 1010 and a computer program product or a computer readable medium in the form of memory 1020. Memory 1020 may be an electronic memory such as a flash memory, an electrically erasable programmable read only memory (EEPROM), an EPROM, a hard disk, or a ROM. The memory 1020 has a storage space 1030 for program codes 1031 for performing any steps in the methods described above. For example, the storage space 1030 for program codes may include respective program codes 1031 for respectively implementing various steps in the above methods. These program codes can be read from or written into one or more computer program products. These computer program products include program code carriers such as hard disks, compact disks (CDs), memory cards or floppy disks. Such a computer program product is typically a portable or fixed storage unit as described with reference to FIG. 5. The storage unit may have storage segments, storage spaces, etc., arranged similarly to the memory 1020 in the computing processing device of FIG. 4. The program code may, for example, be compressed in a suitable form. Typically, the storage unit includes computer readable codes 1031', i.e., codes readable by, for example, a processor such as 1010, these codes, when executed by a computing processing device, cause the computing processing device to perform each step of the method as above-described.

Various implementations of the embodiments in this specification are described in a progressive manner, each implementation focuses on the difference from other implementations, and for the same and similar parts of the various implementations, references may be made to each other.

Though preferred embodiments of the embodiments of this disclosure have been described, additional alterations and modifications to these embodiments can be made by those of ordinary skills in this field once the basic inventive concept is appreciated Therefore, it is intended that the appended claims be construed to cover the preferred embodiment and all changes and modifications which fall within the scope of the embodiments of this disclosure.

Finally, it should also be noted that in here, relational terms such as first and second etc., are used only to distinguish one entity or operation from another entity or operation, and do not necessarily require or imply that these entities or operations, any such actual relationship or order exists. Furthermore, the term "comprises", "includes" or any other variation thereof is intended to cover a non-exclusive inclusion such that a process, method, article, or electronic device that includes a set of elements includes not only those elements, but also includes other elements not expressly listed, or also include elements inherent in such a process, method, article, or electronic device. Without further limitations, an element defined by the phrase "including/comprising a ..." does not exclude the presence of additional identical elements in the process, method, article or electronic device including/comprising said element.

The method and system for setting a personalized driving mode, an electronic device, and a computer-readable storage medium provided by this disclosure have been described above in detail. Specific examples in here are used to illustrate the principles and implementations of this disclosure, and the descriptions of the above embodiments are only used to facilitate understanding of the methods and core ideas of this disclosure. Meanwhile, for those of ordinary skills in this field, there will be changes in specific implementations and scope of applications according to the ideas of this disclosure. In summary, the content of this specification should not be construed as limitations to this disclosure.

## Claims

1. A method for setting a personalized driving mode, applied to a vehicle controller arranged in a vehicle, and the method comprising:
obtaining personalized information set by a user in case that an activation of a personalized driving mode of the vehicle is detected; and
processing the personalized information according to an information type of the personalized information and a pre-configured information processing strategy to generate a target control parameter of the vehicle controller, which is a control parameter of the vehicle in the personalized driving mode.

2. The method according to claim 1, wherein said obtaining the personalized information set by the user comprises any of the following steps:
obtaining pre-stored historical personalized information in case that a selection operation on the historical personalized information triggered by the user is detected;
obtaining newly-added personalized information sent from a cloud, the newly-added personalized information is entered by the user at a mobile terminal and then sent to the cloud to be stored;
identifying a personalized information quick response (QR) code to obtain the newly-added personalized information, the personalized information QR code is generated according to the personalized information entered by the user at the mobile terminal; and
obtaining the newly-added personalized information entered by the user on a human-computer interaction interface of the vehicle controller.

3. The method according to claim 2, wherein said processing the personalized information according to the information type of the personalized information and the pre-configured information processing strategy to generate the target control parameter of the vehicle controller, comprises:
obtaining, according to an association relationship between the pre-stored historical personalized information and the control parameter, the target control parameter corresponding to the historical personalized information in case that the personalized information is the historical personalized information.

4. The method according to claim 2, wherein said processing the personalized information according to the information type of the personalized information and the pre-configured information processing strategy to generate the target control parameter of the vehicle controller, comprises:
performing feature extraction on the newly-added personalized information to obtain first feature data in case that the personalized information is the newly-added personalized information;
converting the first feature data according to a preset conversion rule to obtain a first individualized factor; and
generating, according to the first individualized factor, a first target control parameter of the vehicle controller.

5. The method according to claim 4, wherein said generating, according to the first individualized factor, the first target control parameter of the vehicle controller, comprises:
generating, according to the first individualized factor, an initial physical characteristic parameter;
performing a regression processing on the initial physical characteristic parameter to obtain a standard physical characteristic parameter; and
adjusting the standard physical characteristic parameter according to a range of physical parameters of the vehicle to generate the first target control parameter.

6. The method according to claim 4 or 5, wherein, after the first target control parameter of the vehicle controller is generated, the method further comprises:
establishing an association relationship between the newly-added personalized information and the first target control parameter; and
saving the association relationship between the newly-added personalized information and the first target control parameter as a piece of historical personalized information.

7. The method according to claim 4, wherein, after the first target control parameter of the vehicle controller is generated, the method further comprises:
obtaining data of personalized driving behaviors of the user, the data of personalized driving behaviors is the user's driving behavior data generated by the vehicle in the personalized driving mode;
performing feature extraction on the data of personalized driving behaviors to obtain second feature data;
converting the second feature data according to the preset conversion rule to obtain a second individualized factor; and
generating a second target control parameter of the vehicle controller according to the first individualized factor, the second individualized factor, and a preset proportional relationship between the first individualized factor and the second individualized factor.

8. The method according to claim 4, wherein, after the first target control parameter of the vehicle controller is generated, the method further comprises:
obtaining statistical data of driving behaviors in an area where the user is located;
performing feature extraction on the statistical data of driving behaviors to obtain third feature data;
converting the third feature data according to the preset conversion rule to obtain a third individualized factor; and
generating a third target control parameter of the vehicle controller according to the first individualized factor, the third individualized factor, and a preset proportional relationship between the first individualized factor and the third individualized factor.

9. The method according to claim 4, wherein, after the first target control parameter of the vehicle controller is generated, the method further comprises:
obtaining data of personalized driving behaviors of the user and statistical data of driving behaviors in an area where the user is located, the data of personalized driving behaviors is the user's driving behavior data generated by the vehicle in the personalized driving mode;
performing feature extraction on the data of personalized driving behaviors to obtain second feature data, and performing feature extraction on the statistical data of driving behaviors to obtain third feature data;
converting, according to the preset conversion rule, the second feature data and the third feature data to obtain a second individualized factor and a third individualized factor, respectively; and
generating a fourth target control parameter of the vehicle controller according to the first individualized factor, the second individualized factor, the third individualized factor, and a preset proportional relationship between the first individualized factor, the second individualized factor and the third individualized factor.

10. A system for setting a personalized driving mode, applied to a vehicle controller arranged in a vehicle, and the system comprising:
a first acquisition module, configured to obtain personalized information set by a user in case that an activation of a personalized driving mode of the vehicle is detected;
a first generation module, configured to process the personalized information according to an information type of the personalized information and a pre-configured information processing strategy, to generate a target control parameter of the vehicle controller, and the target control parameter is a control parameter of the vehicle in the personalized driving mode.

11. A vehicle, comprising the system for setting the personalized driving mode according to claim 10.

12. A computing processing device, comprising:
a memory having a computer readable code stored therein; and
at least one processor, wherein the computer readable code when being executed by the at least one processor, the method for setting a personalized driving mode according to any one of claims 1-9 is implemented by the computing processing device.

13. A computer program, comprising computer readable code, wherein the computer readable code, when executed on a computing processing device, causes the computing processing device to perform the method for setting the personalized driving mode according to any one of claims 1-9.

14. A computer readable medium in which the computer program according to claim 13 is stored.
